## Europäisches Patentamt

## European Patent Office

## Office européen des brevets

(19)

(11) Veröffentlichungsnummer: **0 047 373**
**B1**

(12)

# EUROPÄISCHE PATENTSCHRIFT

(45) Veröffentlichungstag der Patentschrift:
05.02.86

(51) Int. Cl.⁴: **D 04 H 1/64**

(21) Anmeldenummer: **81105424.6**

(22) Anmeldetag: **11.07.81**

(54) Verfahren zum Herstellen von mit thermoplastischen Kunststoffpasten imprägnierten Trägerbahnen.

(30) Priorität: **04.09.80 DE 3033264**

(43) Veröffentlichungstag der Anmeldung:
**17.03.82 Patentblatt 82/11**

(45) Bekanntmachung des Hinweises auf die Patenterteilung:
**05.02.86 Patentblatt 86/6**

(84) Benannte Vertragsstaaten:
**AT BE CH DE FR GB IT LI LU NL SE**

(56) Entgegenhaltungen:
**FR - A - 2 439 257**

(73) Patentinhaber: **DYNAMIT NOBEL AKTIENGESELLSCHAFT, Postfach 1209, D-5210 Troisdorf, Bez. Köln (DE)**

(72) Erfinder: **Dost, Gerhard, Dr., Schillerstrasse 11, D-5210 Troisdorf (DE)**
Erfinder: **Gerber, Walter, Hohisteinstrasse 58, D-5210 Troisdorf-Spich (DE)**
Erfinder: **Jaeger, Eberhard, Siebengebirgsblick 3c, D-5210 Troisdorf-Sieglar (DE)**
Erfinder: **Möschter, Erwin, Dr., Hohner Strasse 14, D-5206 Neunkirchen 1 (DE)**
Erfinder: **Weiss, Richard, Dr., Stresemannstrasse 16, D-5210 Troisdorf (DE)**

**Beschreibung**

Die Erfindung bezieht sich auf ein Verfahren zum Herstellen von mit thermoplastischen Kunststoffpasten imprägnierten, porösen textilen Trägerbahnen, insbesondere Vliesen oder Matten auf Basis von Glasfasern mit nachfolgender Ausgelierung der Kunststoffpasten.

Das Beschichten von Flächengebilden mit Kunststoffen ist in dem Buch von Faul Schmidt, 'Beschichten mit Kunststoffen', Carl Hanser-Verlag, München 1967 eingehend dargelegt. Als Flächengebilde bzw. Trägerstoffe kommen hierbei Gewebe und Gewirke aus natürlichen und/oder synthetischen und/oder mineralischen Fasern in Frage, Vliesstoffe, Papiere, Metall folien und Bleche. Als Beschichtungsrohstoffe werden Kunststofflösungen, wässrige Kunststoffdispersionen, Polyvinylchloridpasten und Kunststofforganosole, weichmacherhaltige Kunststoffeststoffe, weichmacherfreie Kunststoffeststoffe eingesetzt.

Die Beschichtungsverfahren gliedern sich auf nach 8treichverfahren mittels Hakelmesser oder Walzenauftrag, Gießen, Impragnieren, Tauchen, Schmelztauchen, Kalandern und Walzenschmelzverfahren, Strangpressen, Kaschieren, Sintern bzw. Wirbelsintern, Pulverauftragsverfahren und Spritzen. Je nach dem gewählten Beschichtungsverfahren sind die Beschichtungsrohstoffe und Trägerstoffe auszuwählen bzw. nach den vorgegebenen Trägerstoffen und Beschichtungsrohstoffen sind entsprechende Beschichtungsverfahren geeignet und anwendbar. Tauchen führt zu einer gleichzeitig beidseitigen Imprägnierung des Trägermaterials. Einseitiges Beschichten führt ggf. zu einer teilweisen Durchdringung des Trägermaterials. So wird in der FR-A- 2 439 257 auf Seite 2, Zeile 9 zwar gesagt, daß das Material 'vollständig' durch imprägniert, je doch sind die Maßnahmen der FRPatentschrift nicht geeignet, eine vollständige Luftverdrängung zu erreichen, zumal es dort offenbar nur darauf ankommt, eine Seite des Materials für eine Bedruckung zu glätten. Für viele Anwendungsfälle wird eine mit thermoplastischen Kunststoffen imprägnierte Trägerbahn gefordert, bei der der Kunststoff die Trägerbahn bzw. deren Bestandteile vollständig umhüllt und wobei Lufteinschlüsse zwischen der Trägerbahn und dem Kunststoff möglichst überhaupt nicht vorhanden sein sollen.

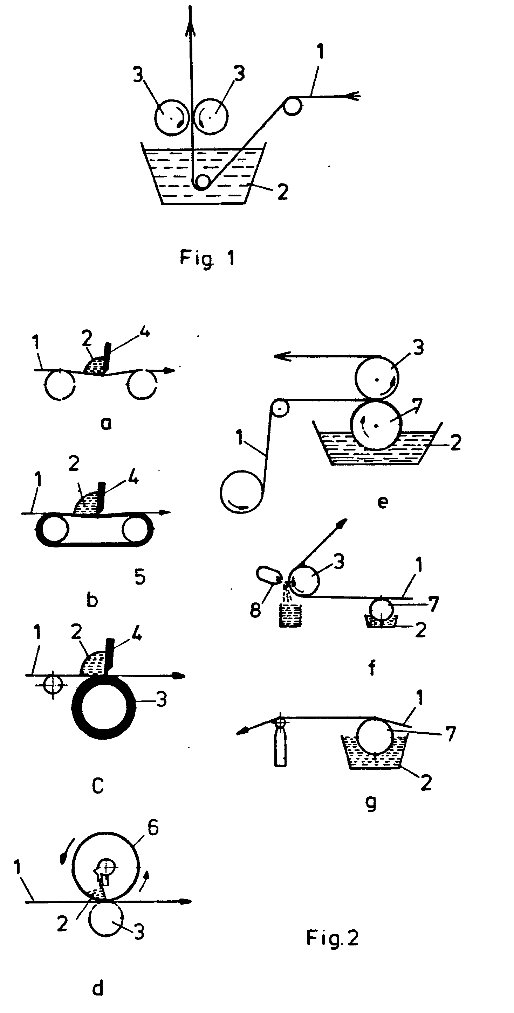

In den Figuren 1 und 2 der beigefügten Zeichnung sind die üblicherweise für eine Imprägnierung in Frage kommenden Beschichtungsverfahren schematisch dargestellt und werden nachfolgend erläutert.

In der Figur 1 ist das Tauchverfahren dargestellt, wobei die Trägerbahn 1 durch eine mit dem Imprägniermittel 2 gefüllte Wanne und anschließend durch ein Dosierwalzenpaar 3 geführt wird, wobei hier das überschüssige Imprägniermittel abgequetscht wird. Bei diesem Verfahren kann auch während des Tauchens der Trägerbahn 1 in der Wanne die Luft im Innern der Trägerbahn nicht vollständig verdrängt werden und sie verbleibt auch beim Abquetschen mittels des Dosierrollenpaares 3 in Form von Luftbläschen in der imprägnierten Trägerbahn erhalten. Bei ansteigenden Tauchgeschwindigkeiten wird zudem noch mehr Luft in die Paste hineingetragen und damit der verbleibende Luftbläschenanteil in der imprägnierten Trägerbahn erhöht. Mit diesem Verfahren ist also die Herstellung von kompakt mit thermoplastischem Künststoff imprägnierten porösen textilen Trägerbahnen, wobei keine Luftbläschen mehr in der imprägnierten Trägerbahn verbleiben, nicht möglich.

Bei den in den Figuren 2a, b und c gezeigten Streichverfahren wird eine Kunststoffpaste 2 mittels eines Rakels 4 auf die Trägerbahn 1 gestrichen. Hierbei wird zwar die Luft nach unten verdrängt, jedoch geschieht das niemals vollständig, insbesondere schon gar nicht bei dickeren Vliesen. Gut fliessende Pasten haben den Nachteil, daß sie nach der Verdrängung leicht aus der Trägerbahn 1 wieder herausfließen und Löcher bzw. wieder zugelaufene Luftblasen hinterlassen. Höher viskose Pasten hingegen haben von vornherein eine schlechte Luftverdrängung. Die gezeigten Verfahren nach 2a mit einem Luftrakel, nach 2b mit einem Gummituchrakel 4, 5 und nach Fig. 2c mit einem Walzenrakel 4, 3 eignen sich insbesondere zum Auftragen von Schichten auf Trägerbahnen.

Das in der Fig. 2d schematisch dargestellte Siebdruckverfahren mittels Rotationssiebdruckschablone 6 ist den Streichverfahren sehr ähnlich. Es hat diesen gegenüber den Vorteil, daß sich keine Glasfaserabbrüche vor einem Rakelmesser aufsammeln, sofern glasfaserhaltige Trägerbahnen beschichtet werden. Im übrigen ist auch mit dem Siebdruckverfahren kein luftblasenfreies kompaktes Imprägnieren von porösen Trägerbahnen durchführbar. Dem steht auch die relativ kurze Verweilzeit im Walzenspalt entgegen die für eine gute Penetration keine rationelle Arbeitsgeschwindigkeit zuläßt. Leicht fliessende Pasten hingegen haben den Nachteil, bei grobmaschigeren Trägerbahnen durchzulaufen und wiederum Löcher zu hinterlassen.

In der Fig. 2e ist schematisch das Rollcoater-Verfahren dargestellt bei dem die Kunststoffpaste 2 mittels der Auftragswalze 7 auf die Tragerbahn 1 aufgetragen und im Walzenspalt der zugeordneten Dosierwalze 3 durch das Vlies gedrückt wird. Diese durch diesen Vorgang lufthaltige Paste wird dann von der Dosierwalze 3 zum Teil mitgenommen und wieder in die Trägerbahn von der Gegenseite hineingedrückt, so daß keine luftbläschenfreie Imprägnierung mit dem Rollcoater-Verfahren möglich ist.

In den Figuren 2f und 2g sind Beschichtungsverfahren mit einem Anpflatschwerk, auch Kisscoater genannt,dargestellt, die üblicherweise zur einseitigen Beschichtung von Trägerbahnen angewendet werden. Die überschüssige Kunststoffpaste 2 wird mittels einer Luftbürste 8 oder einer Dosierwalze entfernt. Für eine kompakte gleichmäßige Durchimprägnierung von porösen Trägerbahnen bei höheren Geschwindigkeiten sind jedoch die bekannten Anpflatschwerke bzw. Kisscoater aufgrund der kurzen Verweilzeit der Trägerbahnen auf dem Kisscoater nicht geeignet.

In der DE-A- 20 54 471 wird bereits ein Verfahren zum Herstellen von faserverstärktem Halbzeug beschrieben, bei dem mit einem Bindemittel verfestigte Mineralfasermatten mit einer wässrigen Dispersion eines Vinylpolymerisates getränkt werden, die getränkten Fasermatten getrocknet und bis zur Gelbildung des Vinylpolymerisates erwärmt werden. Dieses faserverstärkte Halbzeug soll ebenfalls möglichst keine Lufteinschlüsse zwischen de Fasern der Trägerbahn und dem Kunststoff enthalten. Bei Einsatz von Kunststofflösungen oder Kunststoffdispersionen werden nur dann vollständig luftblasenfreie Imprägnierungen erhalten, wenn die Lösungsmittel bzw. das Wasser vollständig und langsam abgedampft werden.Diese Prozedur ist zeitlich sehr aufwendig und daher praktisch bei höheren Geschwindigkeiten (20 - 30 m/min) nicht durchführbar.

Der Erfindung liegt die Aufgabe zugrunde, ein verstärktes thermoplastisches Halbzeug, d.h. mit thermoplastischen Kunststoffen imprägnierte Trägerbahnen zu schaffen, bei dem ein kraftschlüssiger Verbund zwischen allen Teilen der Trägerbahn und der Oberfläche, ein homogenes Verhalten der imprägnierten Bahn über den gesamten Querschnitt bei Luftblasenfreiheit erreicht wird. Weiterhin ist es Aufgabe der Erfindung, ein Herstellungsverfahren zu entwickeln, das bei hohen Arbeitsgeschwindigkeiten eine rationelle Arbeitsweise ermöglicht und Imprägnierungen mit hohen er-zielbaren Flächengewichten zuläßt.

Um bei imprägnierten Trägerbahnen den Einschluß von Luftbläschen, die aus der Beschichtungsmasse bzw. Imprägniermasse resultieren, auszuschließen, geht die Erfindung von evakuierten Kunststoffpasten zum Imprägnieren der porösen Trägerbahnen aus.

Gegenstand der Erfindung ist ein Verfahren zum Herstellen von mit thermoplastischen Kunststoffpasten imprägnierten, porösen textilen Trägerbahnen, insbesondere Vliesen oder Matten auf Basis von Glasfasern mit nachfolgender Ausgelierung der Kunststoffpasten, durch Imprägnieren der Trägerbahn nur von einer Seite her mit einer Paste auf Basis eines Vinylpolymerisates und/oder Copolymeren des Vinylchlorids, wobei die Trägerbahn zum einseitigen Penetrieren über eine Kiss-Coater-Walze geführt wird, dadurch gekennzeichnet, daß eine entlüftete und blasenfreie Paste verwendet wird, und die Trägerbahn die Kiss-Coater-Walzen jeweils in einen Bereich, der einem Umschlingungswinkel von mindestens 50° entspricht, umschlingt, unter vollständiger Luftverdrängung durch die Paste penetriert und kompakt imprägniert wird.

Hierbei wird das Entstehen und Verbleiben von Luftbläschenumhüllungen an Teilen der Trägerbahn durch den Anpressdruck der Trägerbahn aufgrund der Warenbahnspannung vermieden. Mit dem erfindungsgemäßen Verfahren und seinen Weiterbildungen wird eine Trägerbahnimprägnierung geschaffen, die einen kraftschlüssigen Verbund zwischen allen Fasern der Trägerbahn und der Oberfläche der Trägerbahn bewirkt und eine gleichmäßig kompakt imprägnierte Trägerbahn über den gesamten Querschnitt ergibt. Die erfindungsgemäß imprägnierten Trägerbahnen zeigen bei äußerer Belastung von den Oberflächen her keine leichte Trennbarkeit mehr, d.h. die Bahnen reißen nicht mehr im Innern. Die Luftblasenfreiheit der imprägnierten Trägerbahn führt zu einer maximalen Festigkeit des Verbundes und ermöglicht ein einwandfreies Verhalten bei einer späteren Weiterverarbeitung.

Mit besonders gutem Erfolg läßt sich das erfindungsgemäße Verfahren in der Weise durchführen, daß die einseitige Penetrierung der Trägerbahn mit zwei aufeinanderfolgenden Imprägnierungen vorgenommen wird. Hierbei ist von ausschlaggebender Bedeutung, daß die Penetrierung jeweils von der gleichen Seite her fortlaufend erfolgt, so daß mit Sicherheit der Einschluß von Luft dadurch vermieden wird, daß diese jeweils nach der offenen Seite hin entweichen kann, bis die Trägerbahn durch und durch kompakt imprägniert ist. Von entscheidender Bedeutung für den Erfolg des erfindungsgemäßen Verfahrens ist die Führung der Trägerbahn und die Zuführung der Paste um eine blasenfreie Imprägnierung zu erzielen. Hierzu wird erfindungsgemäß vorgeschlagen, daß die Trägerbahn zum einseitigen Penetrieren über eine bzw. zwei mit Abstand aufeinanderfolgende Kisscoater-Walzen geführt wird. Mit Hilfe des Einsatzes eines Kisscoaters, mit dem in bekannter Weise nur einfachste Anpflatschvorgänge, d.h. oberflächliche einseitige Beschich tungen durchgeführt werden, gelingt es überraschend bei entsprechender Trägerbahnführung, die Luft aus der zu imprägnierenden porösen Trägerbahn allmählich mit Druck von einer Seite her kontinuierlich zu verdrängen. Hierbei erfolgt sukzessive die kompakte Imprägnierung der Trägerbahn. Außerdem werden z.B. bei Einsatz von glasfaserhaltigen Trägerbahnen-Faserabbrüche vermieden. Besonders vorteilhaft wird das erfindungsgemäße Verfahren in der Weise ausgeführt, daß die Trägerbahn die Kisscoater-Walzen jeweils in einem Bereich, der einem Umschlingungswinkel von mindestens 50°, vorzugsweise zwischen 60 und 120° der Walzen entspricht, umschlingt. Auf diese Weise wird die Verweilzeit der Trägerbahn bzw. die Auflagefläche der Trägerbahn auf der Kisscoater-Walze so erhöht, daß entsprechend lange Druck zum Durchdrücken der Paste durch die Trägerbahn ausgeübt werden kann. Die Auflagefläche der Trägerbahn auf der Kisscoater-Walze pro Zeiteinheit ist dabei abhängig von dem Umschlingungswinkel dem Walzendurchmesser und der Arbeitsgeschwindigkeit. Diese drei Größen können je nach Bedarf auch in Abhängigkeit von der gewählten Trägerbahn eingestellt werden. Je dicker die zu imprägnierende Trägerbahn ist, desto größer ist die Auflagefläche der Trägerbahn pro Zeiteinheit und damit die Einwirkungsdauer der Paste unter Druck zu wählen. Eine weitere vorteilhafte Ausgestaltung des erfindungsgemäßen Verfahrens besteht darin, daß die Trägerbahn für die erste Imprägnierung über eine Kisscoater-Walze geführt wird und für die nachfolgende zweite Imprägnierung durch einen von einem Rollenpaar gebildeten Spalt geführt wird, wobei die in dem Spalt abgequetschte Paste der ersten Imprägnierung zugleich das Material für die zweite Imprägnierung bildet. Bezüglich der Ausbildung der Kisscoater-Walze gilt das bereits vorangehend Ausgeführte. Die mit der ersten Imprägnierung versehene Trägerbahn wird bei Anwendung eines Rollenpaares für die zweite Imprägnierung so geführt, daß sie mit der nicht penetrierten Seite über die erste Rolle dem Walzenspalt des Rollenpaares zugeführt wird, so daß in dem Spalt auf der penetrierten Seite ein überschüssiger Pastenwulst entsteht, der in dem Spalt zu einer erneuten Penetrierung d. h. der zweiten Imprägnierung führt, wobei Luftblasenfreiheit gegeben ist.

Die erfindungsgemäß beschriebenen Verfahrensweisen erlauben hohe Imprägniergeschwindigkeiten von ca. 15 bis 30 m/min je nach Flächengewichte der Trägerbahnen, wobei die erforderlichen Verweilzeiten, um die

3

notwendige kompakte Durchimprägnierung luftblasenfrei zu erzielen, durch die Doppelimprägnierung entweder mittels zweier Kisscoater oder mittels eines Kisscoater und eines Rollenpaares erzielt wird.

Eine weitere Verbesserung des erfindungsgemäßen Verfahrens ist dadurch möglich, daß auf die dem Penetrieren der Paste gegenüberliegende Seite der Trägerbahn nach dem Penetrieren mindestens ein Schlepprakel einwirkt. Dieses Schlepprakel hat die Aufgabe, auftretende Luftblasen an der oberen. Ober fläche der Trägerbahn zum Zerplatzen zu bringen. Darüber hinaus kann die fertig imprägnierte Trägerbahn vor einer nachfolgenden Gelierung noch geglättet werden, beispielsweise mittels eines Glättwalzenpaares.

Mit dem erfindungsgemäßen Verfahren können luftblasenfrei imprägnierte Trägerbahnen mit einem homogenen Verhalten über den gesamten Querschnitt hergestellt werden, bei denen die Trägerbahn mit einer dem fünffachen bis fünfzehnfachen ihres Eigengewichtes entsprechenden Pastenmenge imprägniert wird. Insbesondere können auch leichtere Vliese mit hohen Imprägniermengen versehen werden. Bevorzugt werden hierbei Pasten mit einer Viskosität zwischen 1 000 und 10.000 cp, vorzugsweise 2000 und 6000 cp verwendet. Ein bevorzugtes Anwendungsgebiet sind die Imprägnierungen der Trägerbahnen mit PVC-Pasten in einem Verhältnis von 40 bis 70 Gew.-% PVC und von 30 bis 60 Gew.-% Weichmacher. Die PVCPasten können darüber hinaus weitere thermoplastische Kunststoffe, wie Acrylate, Polyvinylidenchlorid, Polyester Athylenvinylacetat usw. enthalten sowie in bekannter Weise Füllstoffe, Stabilisatoren, Pigmente, Verarbeitungshilfsmittel besitzen.

Besonders günstige Ergebnisse werden mit dem erfindungsgemäßen Verfahren bei Einsatz von bindemittelhaltigen porösen Trägerbahnen erzielt, wobei der Bindemittelanteil 5 bis 30 Gew.-% bezogen auf das Flächengewicht der Trägerbahn betragen soll.

Eine bevorzugte Anwendung finden Bindemittel, die möglichst temperaturfest bis 200°C sind,damit sie sich beierhöhter Temperatur bei der Herstellung und Weiterverarbeitung der imprägnierten Trägerbahnen nicht lösen. Bevorzugt werden duromere Bindemittel, insbesondere Polykondensationsprode wie Aminoplaste oder Phenoplaste für die Trägerbahn eingesetzt, beispielsweise Formaldehyd-Harnstoffharze, Melaminformaldehydharze, Phenolformaldehydharz.

Eine bevorzugte Ausbildung der Trägerbahn sieht den Einsatz von Glasfaservliesen bzw. Glasfasermatten mit einem Flächengewicht zwischen 15 und 150 g/qm vor. Hierbei können die Vliese oder Matten 100 % Glasfasern enthalten, jedoch können auch anteilig weitere Fasern z.B. Kunststoffasern wie Polyesterfasern oder Graphitfasern enthalten sein. Das erfindungsgemäße Verfahren gestattet, die Glasfasermatten bzw. Glasfaservliese, sowohl die leichten als auch die schweren, mit einer homogenen kompakten luftblasenfreien Beschichtung aus thermoplastischem Kunststoff durchgehend zu imprägnieren, wobei trotz der einseitigen Penetrierung ein im Querschnitt homogenes Produkt entsteht und auch die Oberflächen praktisch gleich ausgebildet sind. Das mit dem erfindungsgemäßen Verfahren hergestellte Produkt ist ein Halbzeug, das z.B. als Verstärkungsschicht in mehrschichtigen Verbundbelägen Anwendung findet. Bevorzugte Anwendungs gebiete sind die Verwendung der nach dem erfindungsgemäßen Verfahren hergestellten mit thermoplastischem Kunststoff imprägnierten Trägerbahn beim Herstellen von Dichtungsbahnen für den Hoch-, Tief- und Ingenieurbau, Fußbodenund Wandbeläge sowie technische Folien, wobei die imprägnierte Trägerbahn ein- bzw. beidseitig mit thermoplastischen bzw. elastomeren Kunststoffolien gleichartiger oder unterschiedlicher Zusammensetzung ggf. unter Zuhilfenahme eines Haftvermittlers kaschiert wird. Die Kunststoffolien können sowohl kompakte Folien als auch Schaumstoffolien sein, es können auch weitere Kaschiermaterialien auf anderer Basis als Kunststoff zur Anwendung kommen. Die imprägnierte Trägerbahn kann beispielsweise kontinuierlich direkt mit weiteren Schichten kaschiert werden, die beispielsweise gleichzeitig mit der Ausgelierung der imprägnierten Trägerbahn mit dieser haftfest verbunden werden oder aber auch zu einem späteren Zeitpunkt, beispielsweise durch Kalandrieren oder andere bekannte Verfahren.

Beispielsweise ist es möglich, unter Einsatz der nach dem erfindungsgemäßen Verfahren hergestellten mit thermoplastischen Kunststoffen imprägnierten Trägerbahn Dichtungsbahnen für den Hoch- und Tiefbau zu erstellen, wobei die imprägnierte Trägerbahn beidseitig z. B. mittels durch Kalandrieren hergestellter thermoplastischer Dichtungsbahnen beispielsweise auf Basis von Weich-PVC mit unterschiedlicher Zusammensetzung bezüglich der Stabilisatoren Pigmente und Füllstoffe zu einer Mehrschichtbahn verbunden wird.

Es ist auch möglich, die erfindungsgemäße imprägnierte Trägerbahn als Transparentbahn auszubilden und mit weiteren transparenten Kunststoffschichten abzudecken und beispielsweise als Material für Pendeltüren oder dgl. einzusetzen. Eine weitere Variante bilden Trägerbahnen mit Bindemitteln auf Basis spezieller thermoplastischer Kunststoffe, insbesondere Acrylate. Diese sind zwar nicht hochtemperaturfest, jedoch besteht bei thermoplastischen Bindemitteln der Vorteil, daß das Bindemittel durch die Beschichtung der Trägerbahn erreicht wird und infolge dessen sich insbesondere die Dehnungseigenschaften der imprägnierten Trägerbahn in erwünschter Weise ändern.

Die Erfindung wird in der Zeichnung an zwei Ausführungsbeispielen näher erläutert, es zeigen

Figur 3 das Verfahren unter Einsatz von zwei Kisscoatern und

Figur 4 das Verfahren unter Einsatz eines Kisscoaters und eines Rollenpaares, jeweils in schematischer Darstellung.

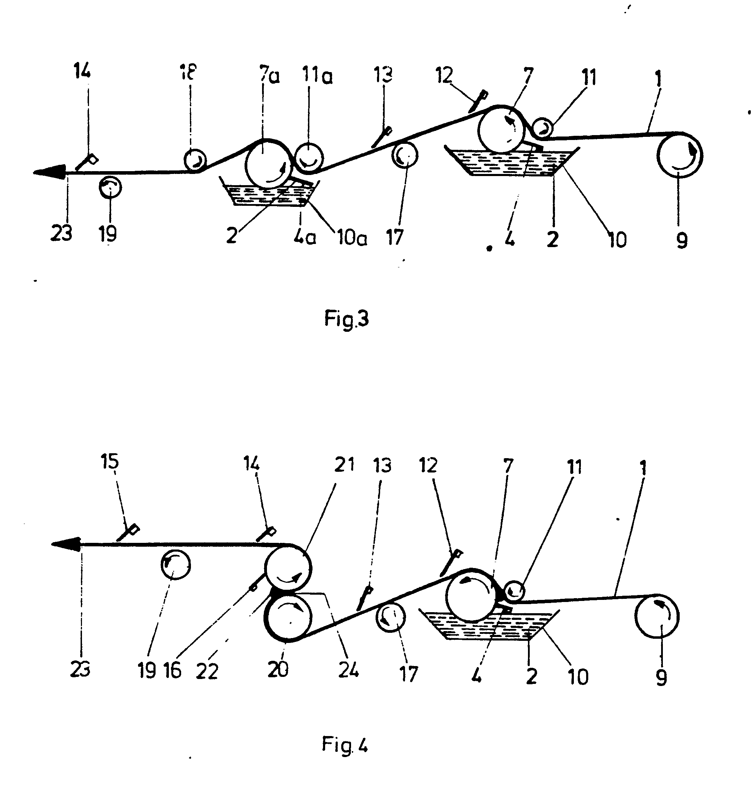

Bei dem in Figur 3 dargestellten erfindungsgemäßen Verfahren wird die zu imprägnierende Trägerbahn 1 von der Abwickelrolle 9 abgezogen und einem ersten Kisscoater zugeführt. Der Kisscoater weist die Wanne 10 mit der Kunststoffpaste 2 auf. Es ist dafür Sorge zu tragen, daß die Kunststoffpaste der Wanne 10 kontinuierlich blasenfrei während des Imprägniervorganges zugeführt wird. Die Auftragwalze 7 taucht einige Zentimenter in die Paste 2 ein. Die Trägerbahn 1 wird auf einer längeren Auflagefläche über die Auftragswalze 7 geführt, wobei die Führungswalze 11 die Auflagefläche und den Umschlingungswinkel der Trägerbahn auf der Auftrags walze 7 bestimmt. Zusätzlich ist noch ein Dosierrakel 4 vorgesehen, das die von der Auftragswalze 7 mitgenommene Pastenmenge dosiert. Je größer der Durchmesser der Auftragswalze 7 ist, desto größer ist bei gleichem Umschlingungswinkel die Auflagefläche der Trägerbahn 1. Es ist jedoch für die Güte der Imprägnierung bzw. Penetrierung nicht nur die Auflagefläche der Trägerbahn 1 auf der Auftragswalze 7 ausschlaggebend, sondern auch die Verweilzeit. Diese wiederun ist abhängig von der Arbeitsgeschwindigkeit. Je höher das Flächengewicht der zu imprägnierenden Trägerbahn ist, desto größer ist die Verweilzeit der Trägerbahn auf der Auftragswalze 7 zu wählen, d. h. die Fläche, die innerhalb einer Zeiteinheit zu durchlaufen ist. Mit dem erfindungsgemäßen Verfahren ist es möglich, Arbeitsgeschwindigkeiten von 20 bis 30 m/min für die Imprägnierung von Trägerbahnen mit Flächengewichten zwischen 15 u. 150 g/qm zu erzielen, wobei eine kompakte Imprägnierung bis zum Fünfzehnfachen des Eigengewichtes der Trägerbahn erreichbar ist. Nachdem die Trägerbahn 1 beim Durchgang über den ersten Kisscoater einseitig mit Paste 2 penetriert worden ist, wird sie einem zweiten Kisscoater zugeführt, wobei auf der Zwischenstrecke noch leichte Schlepprakel 12, 13 auf die Oberfläche einwirken, um Luftblasen zum Zerplatzen zu bringen, auf der Unterseite kann noch eine zusätzliche Führungswalze, die auch als Verreiberwalze wirkt, vorgesehen sein.

Der zweite Kisscoater arbeitet in genau der gleichen Weise wie der erste mit Wanne IOa, Kunststoffpaste 2, Auftragswalze 7a, Führungswalze IIa und Dosierrakel 4a. Mit dem zweiten Kisscoater wird ebenfalls die einseitige Penetrierung der Paste durch die Trägerbahn fortgesetzt, so daß kontinuierlich von einer Seite zur anderen Luft verdrängt wird und bei luftfreier Paste eine kompakt imprägnierte Trägerbahn entsteht. Nach dem Verlassen des zweiten Kisscoaters wird die imprägnierte Trägerbahn 23 über weitere Führungswalzen 18, 19 ggf. an einem weiteren Schlepprakel 14 vorbeigeführt und nachfolgend direkt die Ausgelierung mittels eines Schwebetrockners oder in einem Gelierkanal bei den entsprechenden Temperaturen vorgenommen. Nach dem Abkühlen der ausgelierten imprägnierten Trägerbahn kann diese aufgewickelt werden und als Halbzeug der weiteren Verarbeitung zugeführt werden.

Das erfindungsgemäße Verfahren ist in besonders vorteilhafter Weise auch dadurch ausführbar, daß an Stelle eines zweiten Kisscoaters ein Rollenpaar eingesetzt wird, wie in der Figur 4 schematisch darstellt ist. Der erste Imprägnierschritt der einseitigen Imprägnierung der Trägerbahn 1 wird in analoger Weise zu dem in Figur 3 geschilderten Verfahrensablauf durchgeführt. Hierbei wird die den Kisscoater verlassende Trägerbahn mit ihrer Oberseite, d.h. der der Auflageseite auf dem Kisscoater gegenüberliegende Seite um die erste Rolle 20 des Rollenpaares 20, 21 geführt und zwar über einen längeren Umschlingungswinkel und dann durch den von dem Rollenpaar 20, 21 gebildeten Spalt 24 geführt. Vor dem Spalt 24 bildet sich nun durch den auf der Unterseite der Trägerbahn vorhandenen Überschuß von luftblasenfreier Paste 2 aus der ersten Imprägnierung mittels des Kisscoaters der Pastenwulst 22 zwischen der Trägerbahn 1 und der Rolle 21, die praktisch als Dosierrolle wirkt. Diser Pastenwulst 22 wiederum dient als Imprägniermasse für die zweite Imprägnierung der Trägerbahn 1, die wiederum von der gleichen Seite ausgeht wie beim ersten Imprägnierschritt am Kisscoater. Damit wird an dem Rollenpaar 20, 21 der Vorgang der Imprägnierung wiederholt. Es wäre auch denkbar, die Rolle 20 in eine mit Paste gefüllte Wanne leicht eintauchen zu lassen, um etwas Paste auf der Trägerbahn zusätzlich mitzunehmen, falls von der ersten Imprägnierung durch den Kisscoater nicht genügend Paste mitgenommen worden sein sollte. Es hat sich jedoch herausgestellt, daß der Einsatz eines Rollenpaares 20, 21 ausreicht, um die gewünschte kompakte Imprägnierung mit homogener Verteilung luftblasenfrei der Trägerbahn zu erzielen.

Nachfolgend wird ein Verfahrensbeispiel aufgeführt, mit dem eine imprägnierte Trägerbahn mit dem in Figur 4 dargestellten Verfahren hergestellt wird.

Als Imprägniermaterial wird ein PVC-Plastisol der Zusammensetzung eingesetzt:

150 Gew.-Teile E-PVC, K-Wert 70
140 Gew.-Teile Di-iso-decylphthalat
6 Gew.-Teile epoxidiertes Sojabohnenöl
9 Gew.-Teile Barium-Cadmium-Stabilisator
1 Gew.-Teil Alterungsschutzmittel
0,5 Gew.-Teile UV-Stabilisator

Das PVC-Plastisol wird abgerieben und entlüftet und dann in die Wanne des Kisscoaters eingefüllt, so daß die Auftragswalze 2 bis 5 cm tief eintaucht. Es wird eine Trägerbahn aus einem Glasfaservlies mit 45 g/qm Flächengewicht und 15 Gew.-% Formaldehydharz als Bindemittel bei einer Breite von 2 m des Glasfaservlieses mit einer Transportgeschwindigkeit von 20 m/min. mit dem Kiss-Coater imprägniert und nachfolgend durch ein Rollenpaar, wie in Fig. 4 dargestellt, geführt und nachimprägniert. Anschließend wird das so imprägnierte Glasfaservlies in einem Schwebetrockner bei einer Temperatur von ca. 250°C ausgeliert. Man erhält ein kompakt und homogen mit PVC imprägniertes Glasfaservlies mit einem Flächengewicht von 500 g/qm.

Weiterer Gegenstand der Erfindung ist die Verwendung einer nach dem erfindungsgemäßen Verfahren hergestellten, mit thermoplastischem Kunststoff imprägnierten Trägerbahn zum Herstellen von Dichtungsbahnen für den Hoch-, Tief- und Ingenieurbau, Fußboden- und Wandbeläge sowie technische Folien, wobei die imprägnierte Trägerbahn ein bzw. beidseitig mit thermoplastischen bzw. elastomeren Kunststoffolien, gleichartiger oder unterschiedlicher Zusammensetzung, ggf. unter Zuhilfenahme eines Haftvermittlers kaschiert wird.

**Patentansprüche**

1. Verfahren zum Herstellen von mit thermoplastischen Kunststoffpasten imprägnierten, porösen textilen Trägerbahnen, insbesondere Vliesen oder Matten auf Basis von Glasfasern mit nachfolgender Ausgelierung der Kunststoffpasten, durch Imprägnieren der Trägerbahn nur von einer Seite her mit einer Paste auf Basis eines Vinylpolymerisates und/oder Copolymeren des Vinylchlorids, wobei die Trägerbahn zum einseitigen Penetrieren über eine Kiss-Coater-Walze geführt wird, d adurch gekennzeichnet, daß eine entlüftete und blasenfreie Paste verwendet wird, und die Trägerbahn die Kiss-Coater-Walzen jeweils in einen Bereich, der einem Umschlingungswinkel von mindestens 50° entspricht, umschlingt, unter vollständiger Luftverdrängung durch die Paste penetriert und kompakt imprägniert wird.

2. Verfahren nach Anspruch 1, dadurch gekennzeichnet, daß eine Paste mit einer Viskosität zwischen 1000 und 10.000 cp, vorzugsweise 2.000 und 6.000 cp verwendet wird.

3. Verfahren nach Anspruch 1 oder 2, dadurch gekennzeichnet, daß PVC-Pasten mit einem Verhältnis von 40 bis 70 Gew.-% PVC und 30 bis 60 Gew.-% Weichmacher verwendet werden.

4. Verfahren nach Anspruch 3, dadurch gekennzeichnet, daß PVC-Pasten enthaltend weitere thermoplastische Kunststoffe, wie Acrylate, Polyvinylidenchlorid, Polyester, Athylenvinylacetat, verwendet werden.

5. Verfahren nach einem der Ansprüche 1 bis 4, dadurch gekennzeichnet, daß eine Trägerbahn mit einem Bindemittelanteil von 5 bis 30 Gew.-%, bezogen auf das Flächengewicht der Trägerbahn verwendet wird.

6. Verfahren nach einem der Ansprüche 1 bis 5, dadurch gekennzeichnet, daß thermoplastische Bindemittel, insbesondere Acrylate, für die Trägerbahn eingesetzt werden.

7. Verfahren nach Anspruch 6, dadurch gekennzeichnet, daß duromere Binder, insbesondere Polykondensationsprodukte wie Aminoplaste oder Phenoplaste für die Trägerbahn verwendet werden.

8. Verfahren nach einem der Ansprüche 1 bis 7, dadurch gekennzeichnet, daß die Trägerbahn mit einer dem fünffachen bis fünfzehnfachen ihres Eigengewichtes entsprechenden Pastenmenge imprägniert wird.

9. Verfahren nach einem der Ansprüche 1 bis S, dadurch gekennzeichnet, daß Glasfasermatten bzw. Glasfaservliese mit einem Flächengewicht zwischen 15 und 150 g/m$^2$ als Trägerbahn verwendet werden.

10. Verfahren nach einem der Ansprüche 1 bis 9, dadurch gekennzeichnet, daß die einseitige Penetrierung der Trägerbahn mit zwei aufeinanderfolgenden Imprägnierungen vorgenommen wird.

11. Verfahren nach einem der Ansprüche 1 bis 10, dadurch gekennzeichnet, daß der Umschlingungswinkel an der Kiss-Coater-Walze 60 bis 120° entspricht.

12. Verfahren nach einem der Ansprüche 1 bis 11, dadurch gekennzeichnet, daß die Trägerbahn über zwei mit Abstand aufeinander folgenden Kiss-Coater-Walzen geführt wird.

13. Verfahren nach einem der Ansprüche 1 bis 11, dadurch gekennzeichnet, daß die Trägerbahn für die erste Imprägnierung über eine Kiss-Coater-Walze geführt und für die nachfolgende zweite Imprägnierung durch einen von einem Rollenpaar gebildeten Spalt geführt wird.

14. Verfahren nach einem der Ansprüche 1 bis 13, dadurch gekennzeichnet, daß auf die dem Penetrieren der Paste gegenüberliegenden Seite der Trägerbahn nach dem Penetrieren mindestens ein Schlepprakel einwirkt.

15. Verwendung einer nach einem der Ansprüche 1 bis 14 hergestellten, mit thermoplastischem Kunststoff imprägnierten Trägerbahn, zum Herstellen von Dichtungsbahnen für den Hoch-, Tief- und Ingenieurbau, Fußboden- und Wandbeläge sowie technische Folien, wobei die imprägnierte Trägerbahn ein- bzw. beidseitig mit thermoplastischen bzw. elastomeren Kunststoffolien, gleichartiger oder unterschiedlicher Zusammensetzung, ggf. unter Zuhilfenahme eines Haftvermittlers kaschiert wird.

**Claims:**

1. Process for the production of thermoplastic plastics pastes-impregnated porous textile carrier lengths in particular fleeces or mats based om glass fibres, with subsequent gelling of the plastics pastes, by impregnation of the carrier length only from one side with a paste based on a vinyl polymerisate and/or copolymers of vinylchloride, with the carrier length being guided for one-sided penetration over a kiss coating roller, characterised in that a de-aerated and bubble free paste is used and the carrier length is wrapped around the kiss coating rollers to an extent, which corresponds to a wrapping angle of at least 50°, being penetrated by the paste and compactly impregnated whil subject to complete displacement of air.

2. Process according to claim 1, characterised in that a paste is used with a viscosity between 1000. and 10,000 cp, preferably 2,000 and 6,000 cp.

3. Process according to claim 1 or 2, characterised in that PVC pastes with a content of 40 to 70% by weight PVC and 30 to 60% by weight plasticiser are used.

4. Process according to claim 3, characterised in that PVC pastes containing further thermoplastic plastics such as acrylates, polyvinylidene chloride, polyester, ethylenevinylacetate are used.

5. Process according to one of claims 1 to 4, characterised in that a carrier length with a binder content of 5 to 30% by weight related to the weight per unit area of the carrier length is used.

6. Process according to one of claims 1 to 5, characterised in that thermoplastic binders, in particular acrylates, are employed for the carrier length.

7. Process according to claim 6, characterised in that thermosetting binders, in particular polycondensation products such as aminoplasts or phenoplasts, are used for the carrier length.

8. Process according to one of claims 1 to 7, characterised in that the carrier length is impregnated with an amount of paste corresponding to five to fifteen times its own weight.

9. Process according to one of claims 1 to 8, characterised in that glass fibre mats or glass fibre fleeces with a surface density between 15 and 150 g/m2 are used as carrier length.

10. Process according to one of claims 1 to 9, characterised im that the one-sided penetration of the carrier length is achieved with two consecutive impregnations.

11. Process according to one of claims 1 to 10, characterised im that the wrapping angle on the kiss coating roller corresponds to 60 to 120°.

12. Process according to one of claims 1 to 11, characterised im that the carrier length is guided over two kiss coater rollers following one another with separation.

13. Process according to claims 1 to 11, characterised in that the carrier length is guided over one kiss coating roller for the first impregnatiom amd is , guided through a gap formed by a pair of rollers for the following second impregnation.

14. Process according to one of claims 1 to 13, characterised in that at least one doctor blade acts after the penetration on the side -of the carrier length lying opposite to that penetrated by the paste.

15. Use of a carrier length impregnated with thermoplastic plastics produced according to one of claims 1 to 14, for the production of sealing lengths for above ground, under groumd and engineering construction, floor and wall coverings as well as technical foils, with the impregnated carrier lengths being laminated on one or both sides with thermoplastic or elastomeric synthetic plastic foils of like or different compositiom, optionally with assistamce of a bonding agent.

## Revendications

1. Procédé de fabrication de nappes de support textiles poreuses imprégnées de pâtes de matière synthétique thermoplastique, et notamment de voiles ou de mats à base de fibres de verre avec gélification complète subséquente des pâtes de matière synthétique, par imprégnation de la nappe de support sur un seul côté d'une pâte à base d'un polymère vinylique et/ou de copolymères du chlorure de vinyle, la nappe de support étant, en vue de la pénétration unilatérale, amenée sur un rouleau d'enduction par léchage, caractérisé par le fait qu'on emploie une pâte désaerée et exempte de bulles, et que la nappe de support, qui passe sur les différents rouleaux d'enduction par léchage sur une zone correspondant à un angle de contact d'au moins 50°, est pénétrée par la pâte avec expulsion complète de l'air, et imprégnée de manière compacte.

2. Procédé selon la revendication 1, caractérisé par le fait qu'on emploie une pâte ayant une viscosite comprise entre 1.000 et 10.000 cP, et de préférence entre 2.000 et 6.000 cP.

3. Procédé selon la revendication 1 ou 2, caractérisé par le fait qu'on emploie des pâtes de PCV contenant de 40 à 70 % en poids de PCV et de 30 à 60 % en poids de plastifiant.

4. Procédé selon la revendication 3, caractérisé par le fait qu'on emploie des pâtes de PCV contenant d'autres matières synthétiques thermoplastiques, tels que les acrylates, le polychlorure de vinylidène, le polyester, des copolymères d'éthylène et d'acétate de vinyle.

5. Procédé selon l'une quelconque des revendications 1 à 4, caractérisé par le fait qu'on emploie une nappe de support ayant une teneur en liant de 5 a 30 % en poids rapport au grammage de la nappe de support.

6. Procédé selon l'une des revendications 1 à 5, caractérisé par le fait qu'on utilise pour la nappe de support des liants thermoplastiques, et notamment des acrylates.

7. Procédé selon la revendication 6, caractérisé par le fait qu'on emploie pour la nappe de support des liants duromères, et notamment des produits de polycondensation tels que des aminoplastes ou des phénoplastes.

8. Procédé selon l'une des revendications 1 à 7, caractérisé par le fait que la nappe de support est imprégnée d'une quantité de pâte correspondant à cinq à cuinze fois son poids propre.

9. Procédé selon l'une des revendications 1 à 8, caractérisé par le fait qu'on emploie comme nappe de support des mats ou des voiles de fibres de verre d'un grammage compris entre 15 et 150 g/m2.

10. Procédé selon l'une des revendications 1 à 9, caractérisé par le fait que la pénétration unilatérale de la nappe de support est réalisée par deux imprégnations successives.

11. Procédé selon l'une des revendications 1 à 10, caractérisé par le fait que l'angle de contact sur le rouleau d'enduction par léchage atteint de 60 à 120°.

12. Procédé selon l'une des revendications 1 à 11, caractérisé par le fait que la nappe de support est amenée sur deux rouleaux d'enduction par léchage se succédant à distance l'un de l'autre.

13. Procédé selon l'une des revendications 1 à 11, caractérisé par le fait que pour la première imprégnation, la nappe de support est amenée sur un rouleau d'enduction par léchage, et que pour la deuxième imprégnation subsequente, la nappe de support est amenée à travers une fente formée par une paire de rouleaux.

14. Procédé selon l'une des revendications 1 à 13, caractérisé par le fait qu'après la pénétration, au moins un râcle trainant agit sur le côté de la nappe de support opposé à la pénétration de la pâte.

15. Utilisation d'une nape de support imprégnée de matière synthétique thermoplastique réalisée selon l'une des revendications 1 à 14 pour la fabrication de bandes d'étancheité pour le bâtiment, l'ingéniérie et le génie civil, de revetements de sol, de revetements muraux et de feuilles pour applications industrielles, la nappe de support imprégnée étant dcublée d'un ou des deux côtés de feuilles de matières synthétiques thermoplastiques ou élastomères, de compositions identiques ou différentes, en faisant appel si nécessaire à un agent d'adhérence.

Fig. 1

Fig. 2

Fig.3

Fig. 4